# EUROPEAN PATENT SPECIFICATION

(11) **EP 3 774 512 B1**
(45) Date of publication and mention of the grant of the patent: **30.07.2025**
(21) Application number: 19721136.0
(22) Date of filing: 04.04.2019
(51) Int. Cl.: B62M 1/38, B62K 5/08, B62K 5/02, B62K 1/00

(54) **TRICYCLE PEDAL VEHICLE**
DREIRÄDRIGES PEDALFAHRZEUG
VÉHICULE À PÉDALES DU TYPE TRICYCLE

(30) Priority: 06.04.2018 IT 201800004264
(43) Date of publication of application: 17.02.2021
(73) Proprietor: Bernardi, Claudio, 10045 Piossasco (TO) (IT)
(72) Inventor: Bernardi, Claudio, 10045 Piossasco (TO) (IT)
(74) Representative: Bruni, Giovanni
(86) International application number: PCT/IB2019/052746
(87) International publication number: WO 2019/193523

(56) References cited:
- CN-U- 204 415 616
- JP-A- 2016 055 833
- US-A- 2 207 161
- US-A- 2 995 384
- US-A- 3 860 264
- US-A1- 2009 289 437
- US-A1- 2010 225 088
- US-A1- 2015 329 165
- US-B1- 7 537 229

## Description

### Technical field of the invention

The present invention relates to an innovative vehicle with pedals, in particular a three-wheeled vehicle, particularly but not exclusively suitable for being transported and used in a city.

### Background

As is known, there are many known vehicle with pedals used both for leisure and as a vehicles for usual moving around a city. Moreover, in the last few years, city transport has changed in favor of these environmentally-friendly and easily available means of transport.

These means of transport are above all the classic bicycles made available to users also by numerous Italian Municipalities, to be used instead of traditional means of transport (buses, trams and metro). However, the classic bicycle is not suitable for any type of user, for example for people with stability problems.

Also known for years and available on the market are foldable and transportable two-wheels means.

However, traditional vehicle with pedals are not easily transportable and even those that are commonly folded into different parts to make them comfortable to carry are often provided with extremely small wheels and are therefore difficult to use and require considerable pedaling effort. The document CN 204 415 616 U discloses a vehicle with pedals in accordance with the preamble of claim 1

There is therefore the need for an innovative pedestrian transport device that is extremely compact and extremely comfortable to drive, which overcomes the drawbacks of the known pedal devices.

### Summary of the invention

The purpose of the invention is to provide an innovative vehicle with pedals that is extremely compact in its dimensions, both in length and in height, and therefore easily transportable, easy to use and suitable for any type of user, not indeed, it requires special driving or pedaling skills, as specified in the appended independent claim.

This object is achieved by the means of transport in question by means of a series of structural and dimensional expedients, the result of numerous technical tests, which also guarantee extreme comfort and ease, as well as safety, in driving.

The dependent claims outline particular and further advantageous aspects of the invention.

### Brief description of the drawings

The different ways of carrying out the invention will now be described, by means of examples, with reference to the annexed drawings in which:
- Figure 1 shows a side perspective view of the vehicle with pedals, according to the present invention,
   - - Figure 2 shows a rear view of the vehicle of Fig.1,
- Figure 3 shows a perspective view of the vehicle of Figure 1 during operation, in particular during the steering phase
- Figure 4 shows a rear view of the vehicle shown in Fig.1, during operation, in particular during the steering phase
- Figure 5A shows a perspective view of the vehicle with a detail of the internal mechanism, according to the present invention
- Figure 5B shows a cutaway view of a detail of the rear steering mechanism of the vehicle, according to the present invention.

### Detailed description

With reference to the aforementioned figures, an innovative vehicle with pedals 100 is described. The vehicle 100 comprises a saddle 1, a front wheel 2, a supporting body 6 which covers said front wheel 2, a pair of pedals 5, 5 ', a pair of rear wheels 3, 3 ' and an oscillating mechanism 4 for the connection between the front wheel 2 and the rear wheels 3,3'. The oscillating mechanism 4 allows the inclination and therefore the curvature of the wheels 3, 3' each of which steer on its own vertical axis and synchronously, consequently determining the steering of the vehicle with pedals 100. The supporting body 6 could be replaced by a frame.

According to the invention, in order to obtain a greater compactness of the vehicle with pedals 100, the overall dimensions of the rear wheels 3, 3' are reduced thanks to the fact that the three wheels are partially side by side. Therefore there is a partial overlap in the axial direction of the rear wheels 3, 3' with the front wheel 2. These features allow to obtain an overall length of vehicle with pedals 100 extremely contained.

Furthermore, the presence of three wheels means that the vehicle in question remains in balance by itself, both when used and when it is left standing. It is therefore not necessary nor an additional support, such as a tripod, nor is there a need for the user to place his feet on the ground during periods of rest, for example at a traffic light. The guide of this vehicle is therefore very simple and intuitive and does not require any particular agility or commitment in the guide.

Advantageously, in fact, the rotation of the rear wheels 3, 3' by means of the oscillating mechanism 4 allows the user to make turns and steers without the aid of the hands, which are free during pedaling. Therefore, this vehicle with pedals 100 is devoid of the steering wheel.

The front wheel 2 is of the standard type, as for common bicycles, for example a 28-inch wheel 700mm in diameter, on which is mounted the load-supporting body 6 which completely covers the rear part of the wheel 2 and leaves the front part, in this way, in case of impact, the body 6 is not damaged. Said specific shape of the supporting body 6 also has the function of a mudguard and a protection for the user. In an alternative embodiment, this supporting body 6 also covers the rear wheels 3, 3'.

Advantageously, since the front wheel 2 is of large dimensions, with respect to the wheels of the known pedal means, it allows to face obstacles such as holes, sidewalks, etc.

Having adopted the solution of the front wheel 2 of the standard type, in order to make the present vehicle with pedals compact in length, the saddle 1 is constrained on the upper part of the supporting body 6. Furthermore, the saddle 1 is located in a rearward position with respect to the pedals 5, 5' and to a vertical axis X passing through the center point of a horizontal segment Y, joining the pedals 5, 5' themselves.

To reduce also the overall dimensions, the seat is low, slightly higher than the user's inseam. In addition, a lower center of gravity facilitates pedaling and the balance of the user himself, but in any case the saddle 1 is adjustable in height.

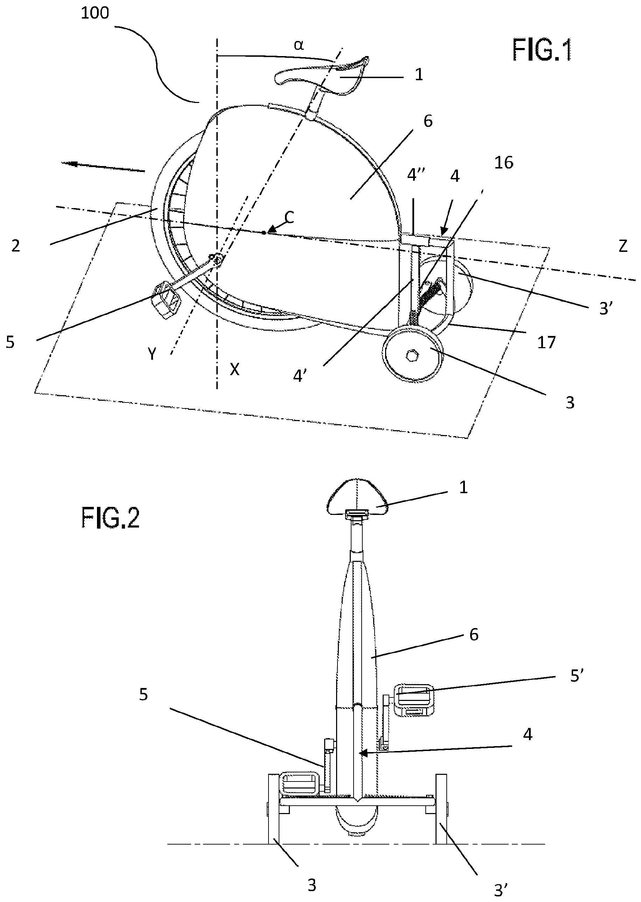

Still for the purpose of reducing the overall dimensions, the pedals 5, 5' are also mounted on the supporting body 6 in an eccentric position with respect to the center C of the front wheel 2 (Fig.1). More precisely, the pedals are mounted in the front and lower part (i.e. towards the ground) of the supporting body 6 so that the user, sitting on the saddle 1, can comfortably and with greater balance operate the pedals. According to the invention, to make pedaling more comfortable, the saddle 1 is inclined with respect to the X axis passing through the center of the Y segment of the pedals 5, 5' of an angle α comprised in a range between 15 ° and 35 °.

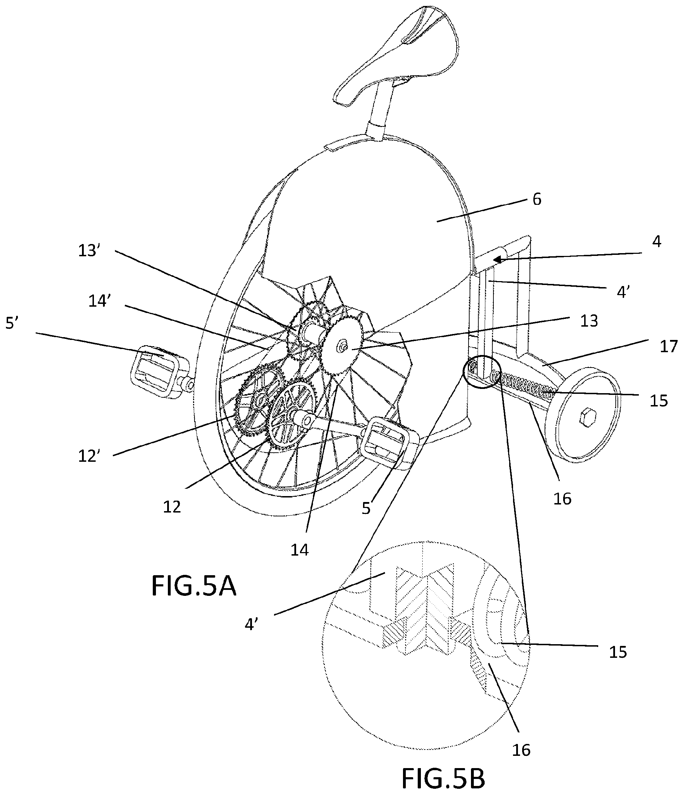

As shown in Fig.5A, the kinematics, i.e. the movement of the components of the vehicle with pedals 100, which transmits the power from the legs of the user to the wheel 2, is positioned symmetrically with respect to the front wheel 2 itself. The kinematics includes the pedals 5, 5' integral respectively with a toothed crown 12, 12' and a pair of pinions 13, 13' connected to the respective toothed crowns 12, 12' each through a chain 14, 14'. The pair of pinions 13, 13' is positioned at the axis of the front wheel 2. Crown 12, 12' and pinion 13, 13 ' respectively on each side of the wheel 2 on which they are positioned, are separated from each other to obtain a smaller footprint and to lower the wheel's center of gravity.

Furthermore, the pedals 5, 5' are not bound to each other, i.e. there is no connection between them inside the front wheel 2, otherwise this connection would hinder the movement of the spokes of the wheel itself.

The toothed crown 12, 12' is for example of the type with 24 teeth with a diameter of about 100mm, the pinion 13, 13' is for example with 16 teeth with a diameter of about 75mm.

Advantageously, the dimensions of the crown and pinion may vary, for example to make pedaling easier in places where there are many climbs.

As in traditional bicycles, the kinematic chain ends with the wheel: it transmits the driving torque to the ground and this creates the movement of the vehicle with pedals. In an alternative solution of the present invention, there is also a chain tensioner located on the loose branch of the chain, the lower one.

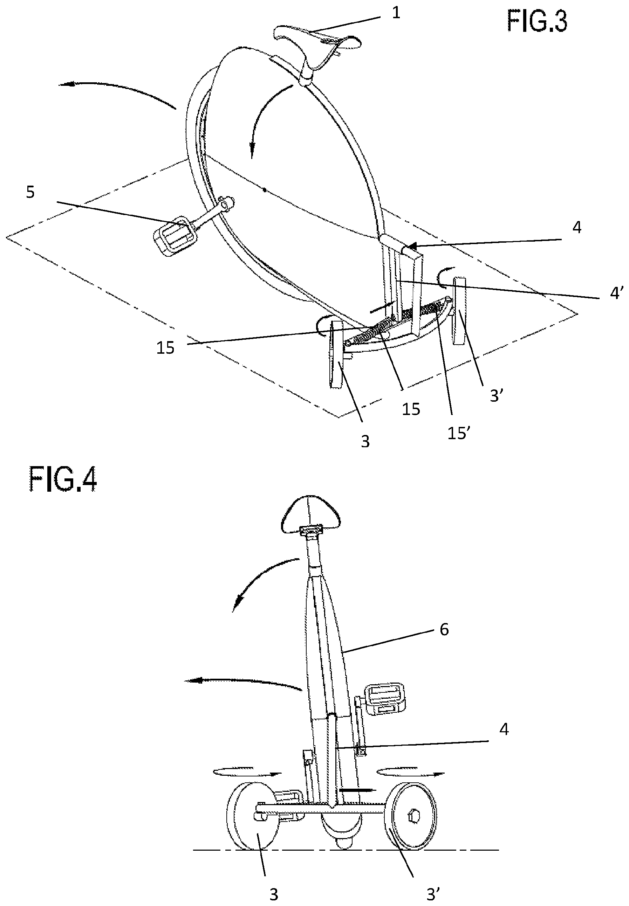

The oscillating mechanism 4, which allows the easy steering of the vehicle with pedals 100 without the aid of the steering wheel or the use of the user's hands, establishes the connection between the supporting body 6 and the rear wheels 3, which can be inclined. Said wheels 3, 3', joined together by an axis 16 configured so as to achieve a minimum bulk, perform the steering function of the vehicle 100. At the same time the rigidity and balance of the vehicle with pedals 100 are guaranteed by a rib 17 of curvilinear shape and with concavity turned towards the supporting body 6 of the vehicle 100, also configured so as to achieve a minimum bulk. As shown in Fig.3 and Fig.4, to make the steering the user only needs to shift his weight to the right or left. In this way the front wheel 2 and the oscillating mechanism 4 integral with the supporting body 6 will be inclined first the front wheel 2 and the oscillating mechanism 4 integral with the supporting body 6.

According to the invention, the front wheel 2 oscillates along an axis Z passing through the center C of the front wheel 2 and through a rod 4 'of the oscillating mechanism 4, therefore this axis Z is almost parallel to the ground.

Consequently, the oscillating mechanism 4 causes the wheels 3, 3 'to rotate to the right or to the left around their vertical axis and synchronously, bringing the vehicle to perform the steering. According to the invention, the oscillating mechanism 4 comprises a rod 4', which is pivoted passively on the axis 16 and therefore this rod 4' acts as a cursor, which will push the axis 16 to the right or to the left according to the inclination of the supporting body 6 and the user. This movement of the axis 16 will therefore cause the rotation of the rear wheels 3, 3 'along their vertical axis and synchronously with each other, and consequently with steering of the vehicle with pedals 100.

Elastic means 15, 15 ', for example helical springs, positioned along the axis 16 or between the axis 16 and the rod 4', guarantee the stability of vehicle with pedals 100 both from standstill and in movement, both during movement straight, both during steering phases.

Advantageously, the rear wheels 3,3' have a significantly smaller size than the front wheel 2, for example of 180 mm in diameter, and are at a distance such as to allow at the same time an easy pedaling and a high compactness of the vehicle subject of the present invention. The wheelbase of the rear wheels 3, 3' has a length of about 400mm.

The means of transport 100, as subject-matter, has very small dimensions and is included in a range of about 70-85 cm of length, 35-50 cm of width and 70-90 cm of height and consequently also has a limited, variable weight between a minimum of 5 kg and a maximum of 15 kg. The height can also vary depending on the height and type of user, depending on whether the latter is a man, woman or child.

These features allow an easy transport, and use everywhere, for example in the elevator, train, bus, car etc ...

In an alternative configuration of the present invention, the means according to the present invention can also be realized with pedal assistance. Furthermore, the front wheel can advantageously be fixed or free-wheel.

These last two configurations (freewheel or pedal assisted) would also be equipped with a braking system which, in an alternative configuration of the present invention comprises brakes positioned on the rear wheels 3, 3' connected to the seat 1 by means of a backrest which is operated in the moment of need it acts on the rear wheels for braking.

Advantageously, the means in question may comprise a cart for transporting a person both seated and standing, and front and rear spotlights.

Furthermore, connected to the supporting body 6 could be connected a coupling system of the means to a pole, to avoid theft.

Advantageously, as already mentioned, the means of the present invention does not require the use of hands (because there is no handlebar), so during its use the user has his hands completely free, for example to hold an umbrella, to speak to the telephone, store, etc. There are also no handlebars or handles in front of the user seated on the saddle 1, so in case of need or in case of rapid descent, this is in no way obstructed.

Furthermore, it must be understood that the realization or the presented embodiments are just examples which do not intend to limit in any way the scope of protection of the invention or its application or its configurations. On the contrary, the summary and the detailed description provide the person skilled in the art of a convenient guide for industrial implementation of at least one exemplary embodiment, being evident that numerous variations can be made regarding function and assembly of the elements described herein, without departing from the scope of protection of the invention as established by the appended claims.

## Claims

1. Vehicle with pedals (100) comprising a saddle (1), a front wheel (2), a supporting body (6) or a frame, a pair of pedals (5, 5') and a pair of rear wheels (3, 3') and an oscillating mechanism (4) between the supporting body (6) of said front wheel (2) and said rear wheels (3, 3'), said oscillating
mechanism realizing the equilibrium of the vehicle with pedals (100) and allowing the inclination of the rear
wheels (3, 3'), consequently determining the steering of the vehicle with pedals (100), the oscillating mechanism (4) comprises a rod (4') pivoted through an axis (16) and configured as a cursor to move the axis (16) to the right or to the left depending on the inclination of the supporting
body (6) and of the user causing the rotation of the rear wheels (3, 3 ') around their vertical axis and synchronously with each other, said vehicle (100) being **characterized in that**, in combination:
- the rear wheels (3, 3') are connected to each other by a rib (17) configured to guarantee stability and balance at the vehicle with pedals (100),
- a kinematic mechanism is positioned on the front wheel (2) and comprises the pedals (5, 5 ') each of them integral with a toothed crown (12, 12 ') and a pair of pinions (13, 13') connected to the respective toothed crowns (12, 12 ') by means of a chain (14, 14'),
- the rear wheels (3, 3') partially overlap the front wheel (2) in the axial direction,
- the saddle (1) is steadily connected to the upper part of the supporting body (6) in a rearward position with respect to a vertical axis (X) passing through the center of a horizontal segment (Y) connecting the pedals (5, 5') and is inclined with respect to the vertical axis (X) passing through the center point of the horizontal segment (Y) of the pedals (5, 5') of an angle (α) comprised in a range between 15° and 35°,
- the front wheel (2) swings along an axis (Z) passing through the center (C) of the front wheel (2) and through a rod (4") of the oscillating mechanism (4), resulting in this axis (Z) almost parallel to the ground.

2. Vehicle with pedals (100) according to claim 1, wherein said oscillating mechanism (4) comprises elastic means (15, 15') positioned along the axis (16) or between the axis (16) and the rod (4') which guarantee the stability of the vehicle with pedals (100) both from a standstill and in movement, both during rectilinear motion and during the steering phases.

3. Vehicle with pedals (100) according to any of the preceding claims, wherein said pedals (5, 5') are mounted on the supporting body (6) in an eccentric position with respect to the center (C) of the front wheel (2).

4. Vehicle with pedals (100) any of the preceding claims, wherein said toothed crown (12, 12') has 24 teeth with a diameter of approximately 100 mm, and said pinion (13, 13') has 16 teeth with a diameter of approximately 75 mm.

5. Vehicle with pedals (100) according to any of the preceding claims, **characterized by** a length ranging from about 70 to 85 cm, a width of between about 35-50 cm and a height of between 70 and 90 cm.

## Patentansprüche

1. Pedalfahrzeug (100), umfassend einen Sattel (1), ein Vorderrad (2), einen Trägerkörper (6) oder einen Rahmen, ein Paar Pedale (5, 5') und ein Paar Hinterräder (3, 3') sowie einen Schwingmechanismus (4) zwischen dem Trägerkörper (6) des Vorderrads (2) und den Hinterrädern (3, 3'), wobei der Schwingmechanismus das Gleichgewicht des Pedalfahrzeugs (100) gewährleistet und die Neigung der Hinterräder (3, 3') ermöglicht und somit die Lenkung des Pedalfahrzeugs (100) bestimmt, wobei der Schwingmechanismus (4) eine Stange (4') umfasst, die um eine Achse (16) drehbar gelagert ist und als Schieber konfiguriert ist, um die Achse (16) je nach Neigung des Trägerkörpers (6) und des Benutzers nach rechts oder links zu bewegen, wodurch die Drehung der Hinterräder (3, 3') um ihre vertikale Achse und synchron zueinander bewirkt wird, wobei das Fahrzeug (100) **dadurch gekennzeichnet** Die Hinterräder (3, 3') sind durch eine Rippe (17) miteinander verbunden, die Stabilität und Gleichgewicht des Fahrzeugs mit Pedalen (100) gewährleistet
- ein kinematischer Mechanismus (100) ist am Vorderrad (2) angeordnet und umfasst die Pedale (5, 5'), die jeweils mit einem Zahnkrone (12, 12') und einem Paar Ritzel (13, 13') verbunden sind, die über eine Kette (14, 14') mit den jeweiligen Zahnkränzen (12, 12') verbunden sind,
- die Hinterräder (3, 3') überlappen das Vorderrad (2) teilweise in axialer Richtung,
- der Sattel (1) ist fest mit dem oberen Teil des Stützkörpers (6) verbunden und befindet sich in einer hinteren Position in Bezug auf eine vertikale Achse (X), die durch die Mitte eines horizontalen Segments (Y) verläuft, das die Pedale (5, 5') verbindet. Er ist gegenüber der vertikalen Achse (X) geneigt, die durch die Der Mittelpunkt des horizontalen Abschnitts (Y) der Pedale (5, 5') bildet einen Winkel (α) im Bereich zwischen 15° und 35°,
- das Vorderrad (2) schwingt entlang einer Achse (Z), die durch den Mittelpunkt (C) des Vorderrads (2) und durch eine Stange (4'') des Schwingmechanismus (4) verläuft, sodass diese Achse (Z) nahezu parallel zum Boden verläuft.

2. Pedalfahrzeug (100) nach Anspruch 1, wobei der Schwingmechanismus (4) elastische Mittel (15, 15') entlang der Achse (16) oder zwischen der Achse (16) und der Stange (4') aufweist, die die Stabilität des Pedalfahrzeugs (100) sowohl im Stillstand als auch in Bewegung, sowohl bei geradliniger Bewegung als auch beim Lenken gewährleisten.

3. Pedalfahrzeug (100) nach einem der vorhergehenden Ansprüche, wobei die Pedale (5, 5') exzentrisch zur Mitte (C) des Vorderrads (2) am Trägerkörper (6) montiert sind.

4. Pedalfahrzeug (100) nach einem der vorhergehenden Ansprüche, wobei die Zahnkrone (12, 12') 24 Zähne mit einem Durchmesser von ca. 100 mm und das Ritzel (13, 13') 16 Zähne mit einem Durchmesser von ca. 75 mm aufweist.

5. Pedalfahrzeug (100) nach einem der vorhergehenden Ansprüche, **gekennzeichnet durch** eine Länge im Bereich von etwa 70 bis 85 cm, eine Breite zwischen etwa 35-50 cm und eine Höhe zwischen 70 und 90 cm.

## Revendications

1. Véhicule à pédales (100) comprenant une selle (1), une roue avant (2), un corps de support (6) ou un cadre, une paire de pédales (5, 5') et une paire de roues arrière (3, 3'), ainsi qu'un mécanisme oscillant (4) entre le corps de support (6) de ladite roue avant (2) et lesdites roues arrière (3, 3'). Ce mécanisme oscillant assure l'équilibre du véhicule à pédales (100) et permet l'inclinaison des roues arrière (3, 3'), déterminant ainsi la direction du véhicule à pédales (100). Le mécanisme oscillant (4) comprend une tige (4') pivotant autour d'un axe (16) et configurée comme un curseur pour déplacer l'axe (16) vers la droite ou vers la gauche en fonction de l'inclinaison du corps de support (6) et de l'utilisateur, provoquant la rotation des roues arrière (3, 3') autour de leur axe vertical et de manière synchrone. Ce véhicule (100) Le véhicule est **caractérisé en ce que** :
- les roues arrière (3, 3') sont reliées entre elles par une nervure (17) conçue pour garantir la stabilité et l'équilibre du véhicule à pédales (100) ;
- un mécanisme cinématique (100) est positionné sur la roue avant (2) et comprend des pédales (5, 5') solidaires chacune d'une couronne dentée (12, 12') et une paire de pignons (13, 13') reliés aux couronnes dentées respectives (12, 12') par une chaîne (14, 14') ;
- les roues arrière (3, 3') chevauchent partiellement la roue avant (2) dans le sens axial ;
- la selle (1) est reliée fixement à la partie supérieure du corps de support (6) en position arrière par rapport à un axe vertical (X) passant par le centre d'un segment horizontal (Y) reliant les pédales (5, 5') et est inclinée par rapport à cet axe (X) passant par le point central du segment horizontal (Y) des pédales (5, 5') d'un angle (α) compris entre 15° et 35°,
- la roue avant (2) oscille selon un axe (Z) passant par le centre (C) de la roue avant (2) et par une tige (4") du mécanisme oscillant (4), ce qui fait que cet axe (Z) est quasiment parallèle au sol.

2. Véhicule à pédales (100) selon la revendication 1, dans lequel ledit mécanisme oscillant (4) comprend des moyens élastiques (15, 15') positionnés le long de l'axe (16) ou entre l'axe (16) et la tige (4'), qui garantissent la stabilité du véhicule à pédales (100) à l'arrêt comme en mouvement, aussi bien en mouvement rectiligne que lors des phases de braquage.

3. Véhicule à pédales (100) selon l'une quelconque des revendications précédentes, dans lequel lesdites pédales (5, 5') sont montées sur le corps de support (6) en position excentrée par rapport au centre (C) de la roue avant (2).

4. Véhicule à pédales (100) selon l'une quelconque des revendications précédentes, dans lequel ladite couronne dentée (12, 12') comporte 24 dents d'un diamètre d'environ 100 mm, et ledit pignon (13, 13') comporte 16 dents d'un diamètre d'environ 75 mm.

5. Véhicule à pédales (100) selon l'une quelconque des revendications précédentes, **caractérisé par** une longueur comprise entre environ 70 et 85 cm, une largeur comprise entre environ 35-50 cm et une hauteur comprise entre 70 et 90 cm.
